# EUROPEAN PATENT SPECIFICATION

(11) **EP 3 493 579 B1**
(45) Date of publication and mention of the grant of the patent: **17.02.2021**
(21) Application number: 17833829.9
(22) Date of filing: 30.05.2017
(51) Int. Cl.: H04W 24/02, H04W 16/14, H04W 72/04

(54) **COMMUNICATION CONTROL DEVICE, RADIO COMMUNICATION DEVICE, METHOD AND PROGRAM**
KOMMUNIKATIONSSTEUERUNGSVORRICHTUNG, FUNKKOMMUNIKATIONSVORRICHTUNG, VERFAHREN UND PROGRAMM
DISPOSITIF DE CONTROL DE COMMUNICATION, DISPOSITIF DE COMMUNICATION RADIO, PROCÉDÉ ET PROGRAMME

(30) Priority: 27.07.2016 JP 2016147615
(43) Date of publication of application: 05.06.2019
(73) Proprietor: Sony Corporation, Tokyo 108-0075 (JP)
(72) Inventor: FURUICHI, Sho, Tokyo 108-0075 (JP)
(74) Representative: Witte, Weller & Partner Patentanwälte mbB
(86) International application number: PCT/JP2017/020141
(87) International publication number: WO 2018/020818

(56) References cited:
- WO-A1-2011/055696
- WO-A1-2011/085073
- WO-A1-2016/074599
- CN-A- 102 740 305
- JP-A- 2012 147 215
- JP-A- 2013 545 365
- US-A1- 2013 201 956

## Description

### Technical Field

The present disclosure relates to a communication control device, a wireless communication device, a device, a method and a program.

### Background Art

As a countermeasure to alleviate shortage of future frequency resources, secondary usage of frequencies has been discussed. Secondary usage of frequencies means that part of or all of frequency channels allocated to a certain system with a higher priority is secondarily used by another system. Generally, a system to which a frequency channel is allocated with a higher priority is called "primary system", and a system that secondarily uses the frequency channel is called "secondary system".

TV whitespaces are an example of frequency channels that are expected to be secondarily used. TV whitespaces mean frequency channels that are allocated to a TV broadcast system serving as a primary system but are not locally used by the TV broadcast system. By allowing a secondary system to use those TV whitespaces, efficient utilization of frequency resources can be achieved. There are a plurality of standards for wireless access schemes in a physical layer (PHY) and MAC layer for enabling secondary usage of the TV whitespaces, such as IEEE802.22, IEEE802.11af, and European Computer Manufacturer Association (ECMA)-392 (CogNea).

In the U.S., activities for introducing a new frequency utilization form called citizens broadband radio service (CBRS) based on secondary usage of frequencies into 3550 to 3700 MHz bands on the basis of federal communications commission (FCC) rules, part 96 which is newly adopted are accelerated. It is assumed at the present moment that long term evolution (LTE) and MulteFire for which development has been promoted in recent years on the basis of LTE become the mainstream as a wireless access system operated in CBRS.

Concerning such secondary usage of frequencies, the following Patent Literature 1 discloses a management serve including a holding unit configured to hold a location/frequency list in which location information is associated with frequency information, a list creating unit configured to extract frequency information corresponding to location information from the location/frequency list on the basis of the location information to create an available frequency list, a transmitting unit configured to transmit the available frequency list to a base station which mainly uses the available frequency list, and a list comparing unit configured to compare the available frequency list transmitted to the base station and an available frequency list returned from the base station, and the list creating unit recreating the available frequency list on the basis of information indicating a frequency being utilized by the base station among the available frequency list.

### Citation List

### Patent Literature

- Patent Literature 1:: JP 5679033B

Further prior art can be found in US 2013/201956 A1, WO 2016/074599 A1, WO 2011/085073 A1 and CN 102 740 305 A.

### Disclosure of Invention

### Technical Problem

However, a technology for secondary usage of frequencies proposed in the above-described Patent Literature 1, or the like, does not assume operation of a wireless system such as a cellular system typified by LTE, which is extensively developed over a wide range. While wireless parameters dynamically change in secondary usage of frequencies, for example, in the cellular system, wireless parameters set on the basis of network design concept, or the like, of each telecommunications carrier are used in a semi-fixed manner. Therefore, operation of the cellular system in secondary usage of frequencies can lead to, for example, increase in operation cost relating to tuning, or the like, of cells.

Therefore, to reduce operation cost relating to tuning, or the like, of cells, it can be considered that carriers introduce a self-organized network (SON). The SON not only self-organizes wireless parameters of an evolved node B (eNB), but also self-constructs an X2 interface with an eNB in the vicinity. It is necessary to make a notification of information relating to a frequency in signaling for self-constructing the X2 interface. In utilization of the SON in secondary usage of frequencies, because an eNB in the vicinity can dynamically change, it becomes necessary to know an eNB in the vicinity in advance. In this event, it is desirable that a signaling amount is suppressed to a minimum.

Further, in the existing SON, information relating to a duplex mode is not included in signaling for constructing the X2 interface. Particularly, in the case where the eNB is operated in TDD, if synchronization of frame configurations and transmission time intervals cannot be secured between adjacent eNBs, adjacent channel interference as well as co-channel interference can become a serious problem. In scenario of secondary usage of frequencies, networks of different carriers as well as networks of the same carrier need to coexist, and, in the case where coexistence control including change of the duplex mode is performed, it is desirable that means for notifying the adjacent eNB of information relating to the duplex mode beyond frameworks of carriers is provided.

In cellular systems of 5G and subsequent generations as well as LTE, a managed Wi-Fi system, or the like, it can be considered that a similar problem may occur if a mechanism similar to that of the SON is employed.

Therefore, the present disclosure proposes a newly improved network management control device, wireless communication device, method and program which are capable of appropriately utilizing an SON in secondary usage of frequencies.

### Solution to Problem

According to the present disclosure, there is provided a network management control device, a wireless communication device, corresponding methods and a computer program as defined in the claims.

### Advantageous Effects of Invention

As described above, according to the present disclosure, it is possible to appropriately utilize an SON in secondary usage of frequencies. Note that the effects described above are not necessarily limitative. With or in the place of the above effects, there may be achieved any one of the effects described in this specification or other effects that may be grasped from this specification.

### Brief Description of Drawings

[FIG. 1] FIG. 1 is an explanatory diagram for explaining outline of a communication system according to an embodiment of the present disclosure.
[FIG. 2] FIG. 2 is a diagram for explaining an architecture according to the present embodiment.
[FIG. 3] FIG. 3 is a block diagram illustrating an example of a configuration of a communication control device according to the present embodiment.
[FIG. 4] FIG. 4 is a block diagram illustrating an example of a configuration of a network management control device 20 according to the present embodiment.
[FIG. 5] FIG. 5 is a block diagram illustrating an example of a configuration of a wireless communication device 30 according to the present embodiment.
[FIG. 6] FIG. 6 is a diagram for explaining an example of procedure in which the wireless communication device notifies the network management control device of information necessary for communication control according to the present embodiment.
[FIG. 7] FIG. 7 is a diagram for explaining an example of procedure in which the network management control device notifies the wireless communication device of information relating to operation according to the present embodiment.
[FIG. 8] FIG. 8 is a diagram for explaining an example of procedure performed by the wireless communication device to construct an interface with a wireless communication device according to the present embodiment.

### Mode(s) for Carrying Out the Invention

Hereinafter, a preferred embodiment of the present disclosure will be described in detail with reference to the appended drawings. Note that, in this specification and the appended drawings, structural elements that have substantially the same function and structure are denoted with the same reference numerals, and repeated explanation of these structural elements is omitted.

In addition, in the present specification and drawings, elements that have substantially the same function and structure are distinguished in some cases by adding different alphabets after the same reference numerals. For example, a plurality of elements that have substantially the same function and structure are distinguished like wireless communication devices 30A and 30B according to necessity. However, in a case where it is not particularly necessary to distinguish among a plurality of elements that have substantially the same function and structure, the same reference numerals are merely given. For example, in the case where it is not particularly necessary to distinguish among the wireless communication devices 30A and 30B, they are simply referred to as a wireless communication device 30.

Note that description will be provided in the following order.
1. Outline
1.1. Overall system configuration
1.2. Technical problems
2. Detailed description of the invention
2.1. Architecture
2.2. Configuration example of network management control device
2.3. Technical features of network management control device
2.4. Configuration example of wireless communication device
2.5. Technical features of wireless communication device
2.5. Procedure
3. Conclusion

### <<1. Outline>>

### <1.1. Overall system configuration>

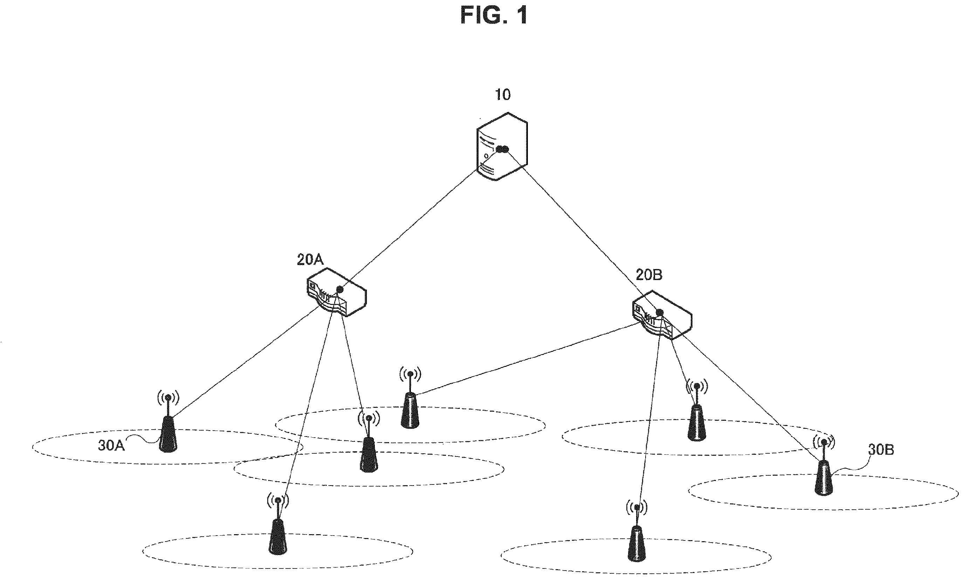

FIG. 1 is an explanatory diagram for explaining outline of a communication system according to an embodiment of the present disclosure.

Referring to FIG. 1, a plurality of wireless communication devices 30A operated by a first telecommunications carrier A, and a plurality of wireless communication devices 30B operated by a second telecommunications carrier B are illustrated. As illustrated in FIG. 1, the wireless communication device 30 is typically a base station, or a transmitting station such as an access point. The wireless communication device 30A which is a transmitting station provides service of the telecommunications carrier A to a receiving station located inside a service area. The wireless communication device 30B which is a transmitting station also provides service of the telecommunications carrier B to a receiving station located inside a service area in a similar manner.

The wireless communication devices 30A and 30B are respectively connected to network management devices 20A and 20B. The network management device 20 is a device introduced by a telecommunications carrier to manage and control the plurality of wireless communication devices 30.

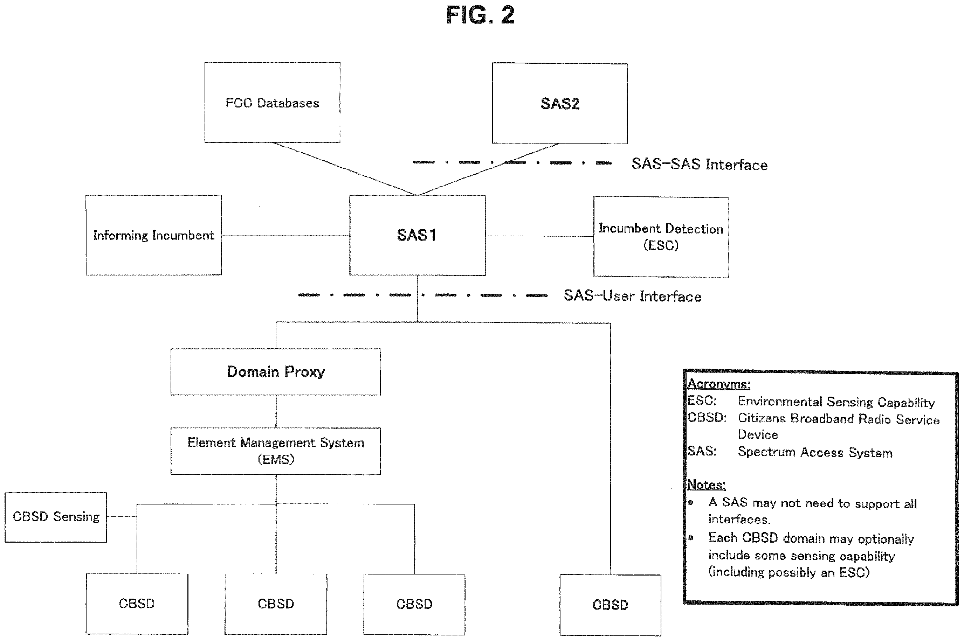

Note that, in LTE, for example, the network management device 20 may be a device called an element management system (EMS) or a domain manager (DM). Alternatively, the network management device 20 may be entity called domain proxy (DP) included in an architecture standardized in a wireless innovation forum (WInnF) illustrated in FIG. 2. Alternatively, a management device which integrally provides the EMS, the DM and the DP or an aggregate of these may be handled as the network management device.

The network management devices 20A and 20B are connected to a communication control device 10. The communication control device 10 provides permission of secondary usage of frequency channels allocated to a primary system to the wireless communication device 30 within a range not providing fatal interference to the primary system. Specifically, the communication control device 10 has a function of notifying each of the wireless communication devices of a list of available frequencies and/or transmission power, or a function of determining whether or not a frequency and/or transmission power which the wireless communication device 30 desires to use can be used and notifying each of the wireless communication devices of the determination result, and typically, protects the primary system. The network management device 20 mediates communication between the plurality of subordinate wireless communication devices 30 and the communication control device 10 and/or assists re-configuration of wireless parameters of the wireless communication devices 30 on the basis of information obtained from the communication control device 10.

Note that examples of the primary system encompass TV broadcast systems, program making and special events (PMSE), radars (military radar, ship-based radar, weather radar, or the like), fixed satellite services (FSS), mobile satellite services (MSS), earth exploration satellite services (EESS), and the like.

Further, the communication control device 10 performs control and judgment so that each of the plurality of wireless communication devices 30 can operate without providing fatal interference to other wireless communication devices 30. Typically, the communication control device 10 performs coexistence management.

Here, there is a case where service areas of a plurality of telecommunications carriers geographically overlap with each other, and frequency bands used overlap with each other. As a specific example, for example, there can be a case where an area where long term evolution (LTE) service is provided and an area where Wi-Fi service is provided overlap with each other, the LTE service and the Wi-Fi service being operated by different telecommunications carriers. Alternatively, for example, there can be a case where an area where long term evolution (LTE) service is provided and an area where 5G and/or further advanced service is provided overlap with each other, although the LTE service and the 5G and/or further advanced service being operated by the same telecommunications carrier. Alternatively, for example, there can be a case where an area where wireless communication service (such as LTE and 5G) operated by a telecommunications carrier is provided and an area where a wireless communication device which is personally operated is operated overlap with each other.

In the present embodiment, it is assumed that part or all of frequency bands allocated to the primary system are secondary used by one or more wireless communication devices in cooperation with each other under such circumstances. To realize this, it is desirable that, in scenario of secondary usage of frequencies by a cellular system, appropriate information for coexistence is exchanged between different telecommunications carriers and between different wireless communication devices.

### <1.2. Technical problems>

There are the following concerns in secondary usage of frequencies by the cellular system.

### (1) Synchronization between wireless communication devices

It is assumed that the wireless communication devices are operated in TDD. In a case of LTE, wireless frame configurations having different combination of uplink and downlink are specified, and to reduce interference, it is necessary to set the same combination between wireless communication devices. Further, it is also necessary to achieve temporal synchronization.

### (2) Signaling relating to construction of X2 interface using SON

It is considered to introduce the SON to reduce operation cost in association with change of operation parameters of a number of wireless communication devices upon secondary usage of frequencies by the cellular system. In the SON, signaling is performed between the wireless communication devices to construct an interface (e.g. an LTE X2 interface) to be utilized for controlling interference, or the like, between the wireless communication devices. To perform signaling, while it is necessary to know which wireless communication device is located in the vicinity, in the scenario of secondary usage of frequencies, a wireless communication device which should be taken into account as a wireless communication device located in the vicinity can dynamically change in association with change of an operating frequency.

Further, while it is considered that interference can be appropriately controlled by wireless frame configurations being made the same upon TDD operation, this information is not included in signaling for constructing the X2 interface. In the case where coexistence control in which the wireless frame configurations are also taken into account is performed, because the wireless frame configurations can also dynamically change, it is desirable that information is appropriately exchanged.

Therefore, in view of the above-described circumstances, the invention according to the embodiment of the present disclosure has been achieved. In secondary usage of frequencies so far, there has not been provided a mechanism for coexistence which is focused on usage of the SON and a duplex mode of the wireless communication device. Therefore, in the present embodiment, a mechanism of utilizing information relating to the wireless communication device located in the vicinity and information relating to the duplex mode is provided. By this means, it becomes possible to realize appropriate secondary usage of frequencies in the cellular system which uses the SON.

### «2. First embodiment»

### <2.1. Architecture>

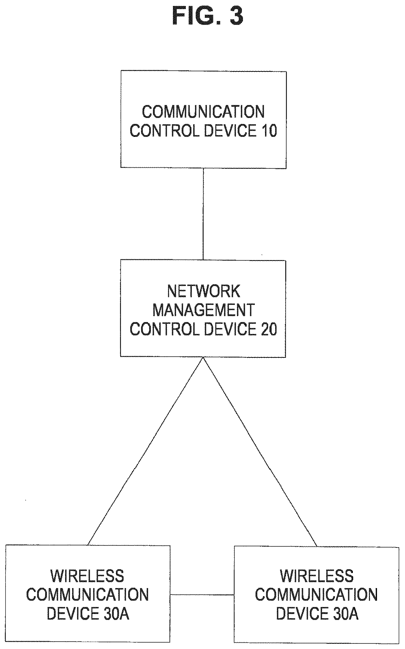

FIG. 3 is a diagram for explaining an architecture according to the present embodiment.

### <2.2. Configuration example of network management control device>

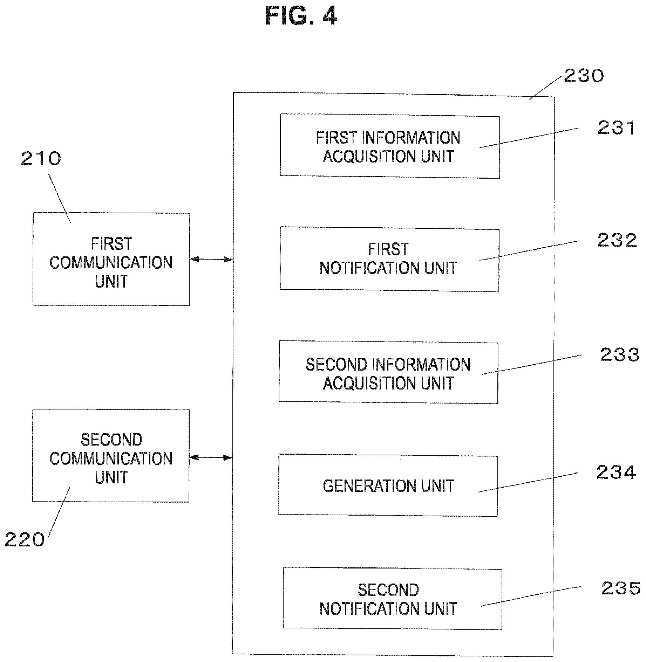

A configuration example of a network management control device will be described below with reference to FIG. 4.

FIG. 4 is a block diagram illustrating an example of a configuration of a network management control device 20 according to the present embodiment. As illustrated in FIG. 4, the network management control device 20 includes a first communication unit 210, a second communication unit 220 and a processing unit 230. Further, the processing unit 230 includes a first information acquisition unit 231, a first notification unit 232, a second information acquisition unit 233, a generation unit 234 and a second notification unit 235.

The first communication unit 210 is a communication interface which mediates communication with the communication control device 10. The first communication unit 210 supports arbitrary wireless communication protocol or wired communication protocol and establishes communication connection with the communication control device 10.

The second communication unit 220 is a communication interface which mediates communication with the wireless communication device 30. The second communication unit 220 supports arbitrary wireless communication protocol or wired communication protocol and establishes communication connection with the wireless communication device 30.

The processing unit 230 provides various functions of the network management control device 20. The processing unit 230 includes the first information acquisition unit 231, the first notification unit 232, the second information acquisition unit 233, the generation unit 234 and the second notification unit 235. Note that the processing unit 230 can further include structural elements other than these structural elements. That is, the processing unit 230 can perform operation other than operation of these structural elements. The functions of the processing unit 230 will be described in detail later.

### <2.3. Technical features of network management control device>

### (1) First information acquisition function

The first information acquisition unit 231 acquires information relating to one or more wireless communication devices 30. The first information acquisition unit 231 acquires at least information indicating a network to which the wireless communication device belongs, radio access technology information, information relating to an operable frequency band, information relating to a geographical location and/or region, information relating to a duplex mode or information relating to a transmission time interval.

Note that part or all of the information may be directly acquired from the wireless communication device 30. Alternatively, in the case where part or all of the information is managed at an information management device which belongs to an external network or an intra-network, the part or all of the information may be acquired from the information management device.

The information indicating a network to which the wireless communication device belongs is typically an identifier indicating a telecommunications carrier. A mobile network code (MNC), a public land mobile network (PLMN) ID, or the like, can be assumed. In the case where the telecommunications carrier further groups the wireless communication devices, an identifier indicating a group to which the wireless communication device belongs may be included. Further, in the case where one or more network management devices 20 are provided by one telecommunications carrier, an identifier for identifying the network management device may be included. In the case where the wireless communication device is a RAT which provides an autonomous distributed network such as Wi-Fi, the information may be an identifier indicating a local network such as an SSID.

The radio access technology information is typically an identifier indicating a RAT provided at the wireless communication device. The radio access technology information may include an identifier of the RAT which can be changed by the wireless communication device as well as an identifier of a RAT which is being operated. Further, an operation parameter which is unique to a RAT, which can contribute to judgement of coexistence control, such as Transmission Mode defined in LTE may be included.

The information relating to the operable frequency band is typically a frequency band at which the wireless communication device can operate with a hardware configuration thereof. For example, a beginning frequency and an end frequency may be provided. Alternatively, for example, the number of a band specified in the 3rd generation partnership project (3GPP) may be provided. Alternatively, for example, in the case where a channel number is allocated as in a TV frequency band, the channel number may be provided. Alternatively, for example, the operable frequency band may be provided using combination of a center frequency and a bandwidth. Whichever information is provided, in the case where the wireless communication device can operate in a plurality of frequency bands, a plurality of pieces of the information relating to the operable frequency bands may be provided.

The information relating to the location is typically information which can specify a geographically location and/or region of the wireless communication device. For example, the information may be coordinate information acquired by the wireless communication device including a positioning function typified by a global navigation satellite system (GNSS). Typically, information relating to longitude, latitude, altitude and a positioning error can be included. Alternatively, for example, the information may be location information registered in an information management device managed by national regulatory authority (NRA) or entrusted institution thereof. Further, for example, as the information indicating the geographical region, information such as census tract, area name, prefecture name, state name, town name, block number, and address can be included as information which is administratively defined. Alternatively, for example, the geographical region may be expressed with combination of three or more pieces of coordinate information. Alternatively, for example, the geographical region may be expressed with combination of coordinate information and radius information.

The information relating to the duplex mode includes at least an identifier indicating a duplex mode which is being operated at the wireless communication device. The information can include an identifier indicating frequency division duplex (FDD), time division duplex (TDD), supplemental downlink (SDL), full duplex, or the like. In the case where the identifier indicates TDD, further, the information includes an identifier indicating a configuration which is being operated among TDD frame configurations indicated in the following Table 1.

**[Table 1]**

| **Configuration** | **Switch-point periodicity** | **Subframe number** | | | | | | | | | |
|---|---|---|---|---|---|---|---|---|---|---|---|
| | | **0** | **1** | **2** | **3** | **4** | **5** | **6** | **7** | **8** | **9** |
| 0 | 5 ms | D | S | U | U | U | D | S | U | U | U |
| 1 | 5 ms | D | S | U | U | D | D | S | U | U | D |
| 2 | 5 ms | D | S | U | D | D | D | S | U | D | D |
| 3 | 10 ms | D | S | U | U | U | D | D | D | D | D |
| 4 | 10 ms | D | S | U | U | D | D | D | D | D | D |
| 5 | 10 ms | D | S | U | D | D | D | D | D | D | D |
| 6 | 5 ms | D | S | U | U | U | D | S | U | U | D |

The above-described Table 1 indicates configurations in 3GPP TS 36.300.

The information relating to the transmission time is typically a transmission time interval (TTI). Further, if the TTI is variable, the information may include a TTI value which can be changed by the wireless communication device.

### (2) First notification function

The first notification unit 232 typically has a function of generating a message based on the information acquired at the first information acquisition unit and transmitting the message to the first communication unit. Specifically, the message can include the information indicating the network to which the wireless communication device belongs, the radio access technology information, the information relating to the operable frequency band, the information relating to the geographical location and/or region, the information relating to the duplex mode or the information relating to the transmission time interval concerning one or more wireless communication devices.

### (3) Second information acquisition function

The second information acquisition unit 233 acquires information relating to operation of one or more wireless communication devices 30. Typically, the second information acquisition unit 233 acquires recommended operation parameters. For example, the information can include one or more pieces of information among information relating to a recommended radio access technology, information relating to a recommend frequency band, information relating to a recommended duplex mode or a recommended transmission time interval.

The recommended radio access technology information is typically an identifier indicating a RAT which is recommended to be operated and/or an operation parameter which is unique to the RAT. The operation parameter which is unique to the RAT is, for example, Transmission Mode specified in LTE.

As the information relating to the recommended frequency band, for example, a beginning frequency band and an end frequency band at which operation is recommended are provided. Alternatively, for example, the number of a band specified in the 3rd generation partnership project (3GPP) may be provided. Alternatively, for example, in the case where a channel number is allocated as in a TV frequency band, the channel number may be provided. Alternatively, for example, the recommended frequency band may be provided using combination of a center frequency and a bandwidth. Whichever information is provided, in the case where operation is recommended in a plurality of frequency bands, a plurality of pieces of information relating to the recommended frequency bands may be provided.

The information relating to the recommended duplex mode includes at least an identifier indicating a duplex mode in which operation is recommended. The information can include an identifier indicating frequency division duplex (FDD), time division duplex (TDD), supplemental downlink (SDL), full duplex, or the like. In the case where the identifier indicates TDD, further, the information includes an identifier indicating a configuration which is being operated among the TDD frame configurations indicated in the above-described Table 1.

The recommended transmission time interval is typically a transmission time interval (TTI).

### (4) Generation function

The generation unit 234 has a function of generating information relating to operation of one or more wireless communication devices 30. Typically, the generation unit 234 generates a list including information of the wireless communication devices which can be located in the vicinity of the wireless communication device 30 using the recommended operation parameters acquired at the second information acquisition unit 233.

For example, in the case where part or all of candidates for an operating frequency band recommended for the wireless communication device 30A is included in the recommended operating frequency band of the wireless communication device 30B, the wireless communication device 30B may be included in the list.

Alternatively, for example, the wireless communication device 30B for which a radio access technology which is the same as the radio access technology recommended for the wireless communication device 30A may be included in the list.

Alternatively, for example, in the case where there are a plurality of candidates for each of the recommended operation parameters acquired at the second information acquisition unit 133, the generation unit 234 may select one or more candidates. In this case, one or more pieces of information of the information relating to the recommended radio access technology, the information relating to the recommended frequency band, the information relating to the recommended duplex mode or the recommended transmission time interval can be included.

For example, in the case where there are a plurality of candidates for the recommended operation parameters, the same parameters may be selected among the wireless communication devices so that a plurality of arbitrary wireless communication devices are likely to be located in the vicinity.

For example, parameters may be selected so that the TTI and the TDD frame configurations become the same among the plurality of wireless communication devices. By this means, it becomes possible to secure synchronization, so that it is possible to reduce co-channel interference and adjacent channel interference.

### (5) Second notification function

The second notification unit typically has a function of generating a message using information relating to operation of one or more wireless communication devices 30, generated at the generation unit 234 and transmitting the message to the second communication unit.

### <2.4. Configuration example of wireless communication device>

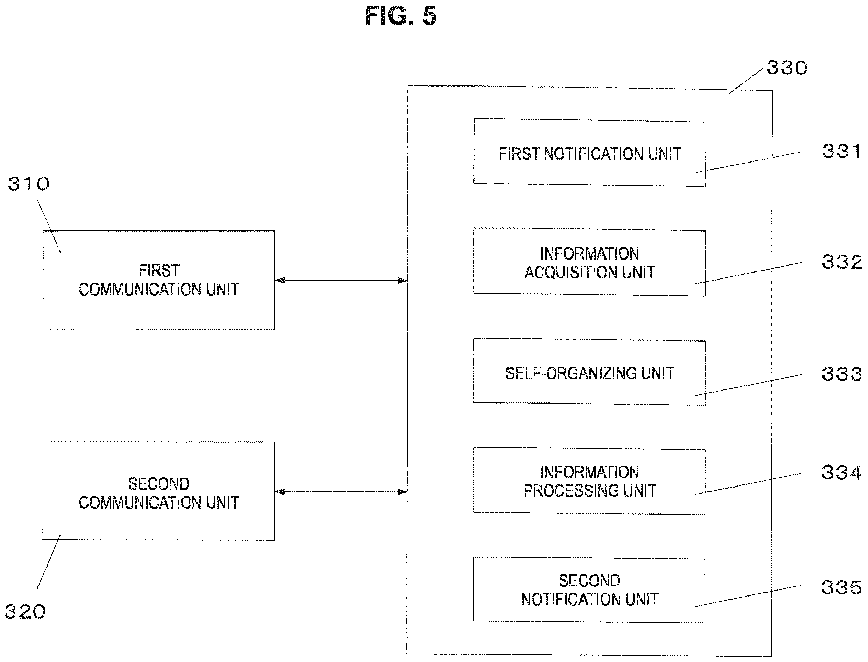

A configuration example of the wireless communication device will be described below with reference to FIG. 5.

FIG. 5 is a block diagram illustrating an example of a configuration of the wireless communication device 30 according to the present embodiment. As illustrated in FIG. 3, the wireless communication device 30 includes a first communication unit 310, a second communication unit 320 and a processing unit 330.

The first communication unit 310 is a communication interface which mediates communication with the network management device 20. The communication unit 310 supports arbitrary wireless communication protocol or wired communication protocol and establishes communication connection with the network management device 20.

The second communication unit 320 is a communication interface which mediates communication with other wireless communication devices 30. The communication unit 320 supports arbitrary wireless communication protocol or wired communication protocol and establishes other wireless communication devices 30.

The processing unit 330 provides various functions of the wireless communication device 30. The processing unit 330 includes a first notification unit 331, an information acquisition unit 332, a self-organizing unit 333, an information processing unit 334 and a second notification unit 335. Note that the processing unit 330 can further include structural elements other than these structural elements. That is, the processing unit 330 can perform operation other than operation of these structural elements. The functions of the processing unit 330 will be described in detail later.

### <2.5. Technical features of wireless communication device>

### (1) First notification function

The first notification unit 331 has a function of transmitting a message including information necessary for communication control to the network management control device 20. The information necessary for communication control includes at least information indicating a network to which the wireless communication device belongs, radio access technology information which is being operated, information relating to an operable frequency band, information relating to a duplex mode and information relating to a transmission time interval.

Further, in the case where it is necessary to notify the network management control device 20 of information relating to a location which can be acquired by a positioning function, the information relating to the location is included in the message.

### (2) Information acquisition function

The information acquisition unit 332 typically has a function of acquiring information relating to operation from the network management control device 20. Specifically, for example, the information acquisition unit 332 acquires the recommended operation parameters selected on the basis of the information notified via the first notification unit 331. One or more pieces of information of recommended radio access technology information, information relating to a recommended frequency band, information relating to a recommended duplex mode or information relating to a recommended transmission time interval can be included.

Further, for example, the information acquisition unit 332 acquires a list including information of the wireless communication devices which can be located in the vicinity. The list can include connection information such as IP addresses, recommended operation parameters and/or current operation parameters concerning one or more other wireless communication devices.

### (3) Self-organization function

The self-organizing unit 333 has a function of setting operation parameters relating to wireless communication. This function is implemented on the basis of the recommended operation parameters acquired at the information acquisition unit 332. One or more of setting of a radio access technology, setting of a frequency band, setting of a duplex mode or setting of a transmission time interval is performed.

### (4) Information processing function

The information processing unit 334 typically extracts a wireless communication device located in the vicinity on the basis of the list including the operation parameters set at the self-organizing unit 333 and information of the wireless communication devices which can be located in the vicinity, acquired at the information acquisition unit 332. A wireless communication device 30 which utilizes at least the same radio access technology and the same operating frequency band is extracted as the wireless communication device located in the vicinity.

### (5) Second notification function

The second notification unit 335 has a function of generating a message for constructing an interface to the wireless communication device located in the vicinity, extracted at the information processing unit 334 and transmitting the message to the second communication unit. The message includes at least the radio access technology information, the operating frequency band, the information relating to the duplex mode and the transmission time interval of the wireless communication device 30.

The radio access technology information is typically an identifier indicating a RAT and/or an operation parameter which is unique to the RAT. The operation parameter which is unique to the RAT is, for example, Transmission Mode specified in LTE.

As the information relating to the operating frequency band, for example, a beginning frequency and an end frequency at which operation is being performed are provided. Alternatively, for example, the number of a band specified in the 3rd generation partnership project (3GPP) may be provided. Alternatively, for example, in the case where channel numbers are allocated as in TV frequency bands, a channel number may be provided. Alternatively, for example, a frequency band may be provided using combination of a center frequency and a bandwidth. Whichever information is provided, in the case where operation is performed in a plurality of frequencies, a plurality of pieces of information relating to the frequency bands may be provided.

The information relating to the duplex mode includes at least an identifier indicating a duplex mode in which operation is being performed. The information can include an identifier indicating frequency division duplex (FDD), time division duplex (TDD), supplemental downlink (SDL), full duplex, or the like. In the case where the identifier indicates TDD, the information further includes an identifier indicating a configuration which is being operated among the TDD frame configurations indicated in the above-described Table 1.

As the transmission time interval, typically, a value of a transmission time interval (TTI) is provided.

### <2.6. Procedure>

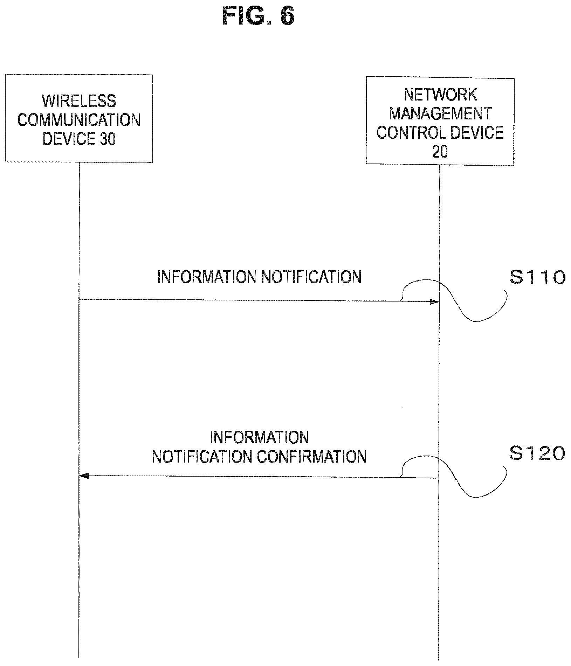

An example of procedure performed in association with introduction of the network management control device 20 and the wireless communication device 30 will be described below with reference to FIG. 6, FIG. 7 and FIG. 8.

The procedure illustrated in FIG. 6 is procedure in which the wireless communication device 30 notifies the network management control device 20 of information necessary for communication control. Information notification (S110) and information notification confirmation (S120) are performed.

The information notification (S110) includes at least information indicating a network to which the wireless communication device belongs, radio access technology information which is being operated, information relating to an operable frequency band, information relating to a duplex mode, and information relating to a transmission time interval. Further, in the case where location information is not managed by the NRA or entrusted institution thereof, and it is necessary to acquire the location information using a positioning function provided at the wireless communication device 30 and notify the communication control device 10 of the location information, the message includes the location information.

The information notification confirmation (S130) can include at least information indicating a message receipt status. For example, the information notification confirmation includes at least a status code. In the case where the status code indicates one other than SUCCESS, the information notification confirmation may include a message indicating error content.

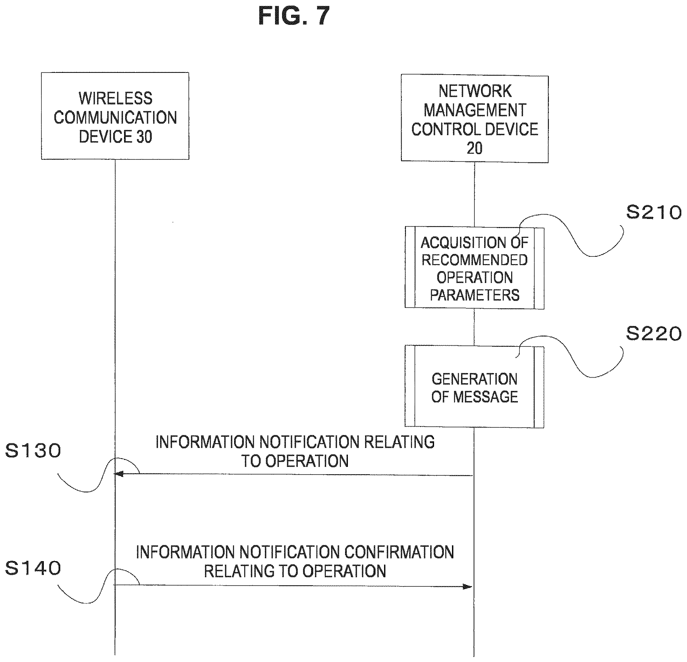

The procedure illustrated in FIG. 7 is procedure in which the network management control device 20 notifies the wireless communication device 30 of information relating to operation. Acquisition of recommended operation parameters (S210), generation of a message (S220), information notification relating to operation (S130) and information notification confirmation relating to operation (S140) are performed.

In the acquisition of recommended operation parameters (S210), recommended operation parameters are acquired by the network management control device 20. Typically, the recommended operation parameters are acquired from the communication control device 10. Alternatively, the network management control device 20 may further select the recommended operation parameters using the recommended operation parameters acquired from the communication control device 10. Alternatively, by being triggered by completion of the procedure illustrated in FIG. 6, the recommended operation parameters may be selected on the initiative of the network management control device 20 using the information acquired through the procedure illustrated in FIG. 6.

In the generation of the message (S220), typically, a message including the information acquired at the acquisition of the recommended operation parameters (S210) is generated.

The information notification relating to operation (130) includes at least the message generated at the generation of the message (S220).

The information notification confirmation relating to operation (S140) can include at least information indicating a message receipt status. For example, the information notification confirmation relating to operation includes at least a status code. In the case where the status code indicates one other than SUCCESS, the information notification confirmation relating to operation may include a message indicating error content.

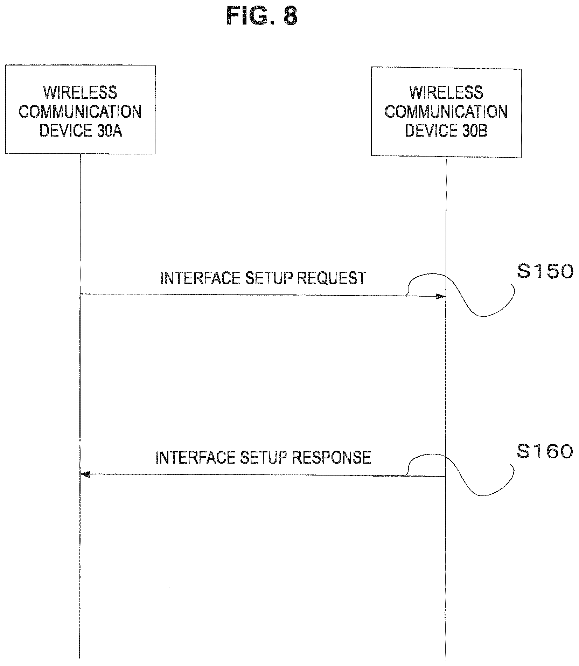

The procedure illustrated in FIG. 8 is procedure performed by the wireless communication device 30A to construct an interface with the wireless communication device 30B. Interface setup request (S150), and interface setup response (S160) are included.

The interface setup request (S150) includes at least information relating to an operating frequency band, information relating to a duplex mode, and information relating to a transmission time interval. For example, in the case where the wireless communication device 30 is an eNB of LTE, X2 interface setup request defined in standards of the SON, the information relating to the duplex mode, and the information relating to the transmission time interval may be included.

The interface setup response (S160) can include at least information indicating a message receipt status. For example, the interface setup response includes at least a status code. In the case where the status code indicates one other than SUCCESS, the interface setup response may include a message indicating error content.

### <<4. Conclusion>>

An embodiment of the present disclosure has been described above in detail with reference to FIG. 1 to FIG. 8. As described above, the network management control device according to the present embodiment can acquire information indicating a network to which the wireless communication device managed by the network management control device belongs, the radio access technology information, the information relating to the operable frequency band, the location information, the information relating to the duplex mode, and the information relating to the transmission time interval. By this means, it becomes possible to generate a list of wireless communication devices located in the vicinity of each of the wireless communication devices, so that it becomes possible to construct an interface between the wireless communication devices even when the operation parameters are changed. Further, it becomes possible to exchange the information relating to the duplex mode and the information relating to the transmission time interval between different wireless communication devices, so that synchronization is secured, and it becomes possible to reduce co-channel interference and adjacent channel interference.

The preferred embodiment of the present disclosure has been described above with reference to the accompanying drawings, whilst the present disclosure is not limited to the above examples.

Further, it is also possible to create a computer program for causing a processor (such as, for example, a CPU and a DSP) provided at the device in the present specification (for example, a base station, a base station device or a module for the base station device, a terminal device or a module for the terminal device) to function as structural elements (such as, for example, the processing unit 130) of the above-described device (in other words, a computer program for causing the above-described processor to execute operation of structural elements of the above-described device). Further, it is also possible to provide a recording medium in which the computer program is recorded. Further, it is also possible to provide a device including a memory in which the above-described computer program is stored and one or more processors which can execute the above-described computer program (for example, a base station, a base station device or a module for the base station device, a terminal device or a module for the terminal device). Further, a method including operation of the structural elements (such as, for example, the processing unit 130) of the above-described device is included in the technology according to the present disclosure.

For example, the processing described herein with reference to the flowcharts and the sequence diagrams does not necessarily have to be executed in the illustrated order. Some processing steps may be executed in parallel. In addition, additional processing steps may also be adopted, while some of the processing steps may be omitted.

Further, the effects described in this specification are merely illustrative or exemplified effects, and are not limitative. That is, with or in the place of the above effects, the technology according to the present disclosure may achieve other effects that are clear to those skilled in the art from the description of this specification.

### Reference Signs List

- 10: communication control device
- 20: network management control device
- 210: first communication unit
- 220: second communication unit
- 230: processing unit
- 231: first information acquisition unit
- 232: first notification unit
- 233: second information acquisition unit
- 234: generation unit
- 235: second notification unit
- 30: wireless communication device
- 310: first communication unit
- 320: second communication unit
- 330: processing unit
- 331: first notification unit
- 332: information acquisition unit
- 333: self-organizing unit
- 334: information processing unit
- 335: second notification unit

## Claims

1. A network management control device (20) comprising:
a first information acquisition unit (231) configured to acquire information indicating a network to which one or more wireless communication devices (30) belong, radio access technology information, information relating to an operable frequency band, information relating to a geographical location and/or region, information relating to a duplex mode, or information relating to a transmission time interval, wherein the information relating to the duplex mode includes at least an identifier indicating a duplex mode, and wherein the duplex mode is TDD and the information relating to the duplex mode further includes one or more candidates for a frame configuration including combination of uplink and downlink;
a first notification unit (232) configured to notify a communication control device (10) of the information;
a second information acquisition unit (233) configured to acquire a recommended operation parameter selected on a basis of the information;
a generation unit (234) configured to generate a list including information of a second wireless communication device which has a calculated high probability of being located in the surrounding radio environment of the wireless communication device, by using the recommended operation parameter acquired by the second information acquisition unit; and
a second notification unit (235) configured to notify the wireless communication device of the list and the recommended operation parameter.

2. The network management control device according to claim 1,
wherein the first information acquisition unit (231) is configured to acquire at least the information relating to the geographical location and/or region and the information relating to the duplex mode,
the recommended operation parameter acquired by the second notification unit (235) includes at least information relating to a recommended duplex mode, and
the generation unit (234) is configured to generate the list including the information of the wireless communication device which has a possibility of being located in a vicinity of the wireless communication device, by using the information relating to the recommended duplex mode.

3. A wireless communication device (30) comprising:
a first notification unit (331) configured to notify a network management control device (20) of information indicating a network, radio access technology information, information relating to an operable frequency band, information relating to a geographical location and/or region, information relating to a duplex mode, or information relating to a transmission time interval, wherein the information relating to the duplex mode includes at least an identifier indicating a duplex mode, and wherein the duplex mode is TDD and the information relating to the duplex mode further includes one or more candidates for a frame configuration including combination of uplink and downlink;
an information acquisition unit (332) configured to acquire a recommended operation parameter and a list including information of a second wireless communication device which has a calculated high probability of being located in the surrounding radio environment from the network management control device;
a self-organizing unit (333) configured to self-organize a wireless parameter on a basis of the recommended operation parameter acquired by the information acquisition unit;
an information processing unit (334) configured to extract a second wireless communication device which is located in the surrounding radio environment from the list acquired by the information acquisition unit by using the wireless parameter organized by the self-organizing unit; and
a second notification unit (335) configured to perform signaling for constructing an interface with the second wireless communication device which is located in the surrounding radio environment and which has been extracted by the information processing unit.

4. The wireless communication device according to claim 3,
wherein the recommended operation parameter acquired by the information acquisition unit (332) includes at least information relating to a recommended duplex mode, and
the self-organizing unit (333) is configured to self-organize a parameter relating to a duplex mode by using the information relating to the recommended duplex mode.

5. The wireless communication device according to claim 4,
wherein in a case where TDD is recommended, the self-organizing unit selects one of the candidates for the frame configuration and performs self-organization such that operation based on the selected frame configuration is performed.

6. The wireless communication device according to claim 3,
wherein the second notification unit (335) is configured to perform signaling including at least information relating to an operating frequency band and information relating to a duplex mode.

7. A method comprising:
acquiring information indicating a network to which one or more wireless communication devices (30) belong, radio access technology information, information relating to an operable frequency band, information relating to a geographical location and/or region, information relating to a duplex mode, or information relating to a transmission time interval, wherein the information relating to the duplex mode includes at least an identifier indicating a duplex mode, and wherein the duplex mode is TDD and the information relating to the duplex mode further includes one or more candidates for a frame configuration including combination of uplink and downlink;
notifying a communication control device (10) of the information;
acquiring a recommended operation parameter selected on a basis of the information;
generating a list including information of a second wireless communication device which has a calculated high probability of being located in the surrounding radio environment of the wireless communication device, by using the recommended operation parameter acquired by the second information acquisition unit; and
notifying the wireless communication device of the list and the recommended operation parameter.

8. A method comprising:
notifying a network management control device (20) of information indicating a network, radio access technology information, information relating to an operable frequency band, information relating to a geographical location and/or region, information relating to a duplex mode, or information relating to a transmission time interval, wherein the information relating to the duplex mode includes at least an identifier indicating a duplex mode, and wherein the duplex mode is TDD and the information relating to the duplex mode further includes one or more candidates for a frame configuration including combination of uplink and downlink;
acquiring a recommended operation parameter and a list including information of a second wireless communication device (30) which has a calculated high probability of being located in the surrounding radio environment from the network management control device;
self-organizing a wireless parameter on a basis of the recommended operation parameter;
extracting a second wireless communication device which is located in the surrounding radio environment from the list, by using the wireless parameter used in the self-organization; and
performing signaling for constructing an interface with the extracted second wireless communication device which is located in the surrounding radio environment.

9. A computer program comprising program code means for causing a computer to perform the steps of said method according to claim 7 or 8 when said computer program is carried out on a computer.

## Patentansprüche

1. Netzwerkverwaltungssteuervorrichtung (20), umfassend:
eine erste Informationserfassungseinheit (231), die dafür ausgelegt ist, Informationen zu erfassen, die Folgendes angeben: ein Netzwerk, zu dem eine oder mehrere Drahtloskommunikationsvorrichtungen (30) gehören, Informationen über Funkzugangstechnologie, Informationen, die sich auf ein betriebsfähiges Frequenzband beziehen, Informationen, die sich auf einen geografischen Ort und/oder eine geografische Region beziehen, Informationen, die sich auf einen Duplex-Modus beziehen, oder Informationen, die sich auf ein Übertragungszeitintervall beziehen, wobei die Informationen, die sich auf den Duplex-Modus beziehen, mindestens eine Kennung beinhalten, die einen Duplex-Modus anzeigt, und wobei es sich beim Duplex-Modus um TDD handelt und die Informationen, die sich auf den Duplex-Modus beziehen, ferner einen oder mehrere in Frage kommende Frameauslegungen beinhalten, einschließlich einer Kombination von Uplink und Downlink;
eine erste Benachrichtigungseinheit (232), die dafür ausgelegt ist, eine Kommunikationssteuerungsvorrichtung (10) über die Informationen zu benachrichtigen;
eine zweite Informationserfassungseinheit (233), die dafür ausgelegt ist, einen empfohlenen Betriebsparameter zu erfassen, der auf der Grundlage der Informationen ausgewählt wurde;
eine Erzeugungseinheit (234), die dafür ausgelegt ist, eine Liste zu erzeugen, die Informationen über eine zweite Drahtloskommunikationsvorrichtung beinhaltet, bei der eine berechnete hohe Wahrscheinlichkeit besteht, dass sie sich in der umliegenden Funkumgebung der Drahtloskommunikationsvorrichtung befindet, unter Verwendung des empfohlenen Betriebsparameters, der von der zweiten Informationserfassungseinheit erfasst wurde; und
eine zweite Benachrichtigungseinheit (235), die dafür ausgelegt ist, die Drahtloskommunikationsvorrichtung über die Liste und den empfohlenen Betriebsparameter zu benachrichtigen.

2. Netzwerkverwaltungssteuervorrichtung nach Anspruch 1,
wobei die erste Informationserfassungseinheit (231) dafür ausgelegt ist, zumindest die Informationen bezüglich des geografischen Orts und/oder der geografischen Region und die Informationen bezüglich des Duplex-Modus zu erfassen,
der empfohlene Betriebsparameter, der von der zweiten Benachrichtigungseinheit (235) erfasst wird, zumindest Informationen bezüglich eines empfohlenen Duplex-Modus beinhaltet und
die Erzeugungseinheit (234) dafür ausgelegt ist, die Liste einschließlich der Informationen über die Drahtloskommunikationsvorrichtung, bei der eine Möglichkeit besteht, dass sie sich in der Nähe der Drahtloskommunikationsvorrichtung befindet, unter Verwendung der Informationen bezüglich des empfohlenen Duplex-Modus zu erzeugen.

3. Drahtloskommunikationsvorrichtung (30), umfassend:
eine erste Benachrichtigungseinheit (331), die dafür ausgelegt ist, eine Netzwerkverwaltungssteuervorrichtung (20) über Informationen zu benachrichtigen, die Folgendes angeben: ein Netzwerk, Informationen über Funkzugangstechnologie, Informationen, die sich auf ein betriebsfähiges Frequenzband beziehen, Informationen, die sich auf einen geografischen Ort und/oder eine geografische Region beziehen, Informationen, die sich auf einen Duplex-Modus beziehen, oder Informationen, die sich auf ein Übertragungszeitintervall beziehen, wobei die Informationen, die sich auf den Duplex-Modus beziehen, mindestens eine Kennung beinhalten, die einen Duplex-Modus anzeigt, und wobei es sich beim Duplex-Modus um TDD handelt und die Informationen, die sich auf den Duplex-Modus beziehen, ferner einen oder mehrere in Frage kommende Frameauslegungen beinhalten, einschließlich einer Kombination von Uplink und Downlink;
eine Informationserfassungseinheit (332), die dafür ausgelegt ist, einen empfohlenen Betriebsparameter und eine Liste einschließlich Informationen über eine zweite Drahtloskommunikationsvorrichtung, die sich mit einer berechneten hohen Wahrscheinlichkeit in der umliegenden Funkumgebung befindet, von der Netzwerkverwaltungssteuervorrichtung zu erfassen;
eine Selbstorganisationseinheit (333), die dafür ausgelegt ist, einen Drahtlos-Parameter auf der Grundlage des empfohlenen Betriebsparameters, der von der Informationserfassungseinheit erfasst wird, selbst zu organisieren;
eine Informationsverarbeitungseinheit (334), die dafür ausgelegt ist, eine zweite Drahtloskommunikationsvorrichtung, die sich in der umliegenden Funkumgebung befindet, aus der von der Informationserfassungseinheit erfassten Liste unter Verwendung des von der Selbstorganisationseinheit organisierten Drahtlos-Parameters zu extrahieren; und
eine zweite Benachrichtigungseinheit (335), die dafür ausgelegt ist, Signalisierung zum Aufbau einer Schnittstelle mit der zweiten Drahtloskommunikationsvorrichtung durchzuführen, die sich in der umliegenden Funkumgebung befindet und die von der Informationsverarbeitungseinheit extrahiert wurde.

4. Drahtloskommunikationsvorrichtung nach Anspruch 3, wobei der von der Informationserfassungseinheit (332) erfasste empfohlene Betriebsparameter zumindest Informationen bezüglich eines empfohlenen Duplex-Modus beinhaltet, und
die Selbstorganisationseinheit (333) dafür ausgelegt ist, einen Parameter, der sich auf einen Duplex-Modus bezieht, unter Verwendung der Informationen, die sich auf den empfohlenen Duplex-Modus beziehen, selbst zu organisieren.

5. Drahtloskommunikationsvorrichtung nach Anspruch 4, wobei in einem Fall, in dem TDD empfohlen wird, die Selbstorganisationseinheit eine der in Frage kommenden Frameauslegungen auswählt und Selbstorganisation derart durchführt, dass eine Operation auf der Grundlage der ausgewählten Frameauslegung durchgeführt wird.

6. Drahtloskommunikationsvorrichtung nach Anspruch 3, wobei die zweite Benachrichtigungseinheit (335) dafür ausgelegt ist, Signalisierung durchzuführen, die zumindest Informationen bezüglich eines Betriebsfrequenzbandes und Informationen bezüglich eines Duplex-Modus beinhaltet.

7. Verfahren, umfassend:
Erfassen von Informationen, die Folgendes angeben: ein Netzwerk, zu dem eine oder mehrere Drahtloskommunikationsvorrichtungen (30) gehören, Informationen über Funkzugangstechnologie, Informationen, die sich auf ein betriebsfähiges Frequenzband beziehen, Informationen, die sich auf einen geografischen Ort und/oder eine geografische Region beziehen, Informationen, die sich auf einen Duplex-Modus beziehen, oder Informationen, die sich auf ein Übertragungszeitintervall beziehen, wobei die Informationen, die sich auf den Duplex-Modus beziehen, mindestens eine Kennung beinhalten, die einen Duplex-Modus anzeigt, und wobei es sich beim Duplex-Modus um TDD handelt und die Informationen, die sich auf den Duplex-Modus beziehen, ferner einen oder mehrere in Frage kommende Frameauslegungen beinhalten, einschließlich einer Kombination von Uplink und Downlink;
Benachrichtigen einer ersten Kommunikationssteuerungsvorrichtung (10) über die Informationen;
Erfassen eines empfohlenen Betriebsparameters, der auf der Grundlage der Informationen ausgewählt wurde;
Erzeugen einer Liste, die Informationen über eine zweite Drahtloskommunikationsvorrichtung beinhaltet, bei der eine berechnete hohe Wahrscheinlichkeit besteht, dass sie sich in der umliegenden Funkumgebung der Drahtloskommunikationsvorrichtung befindet, unter Verwendung des empfohlenen Betriebsparameters, der von der zweiten Informationserfassungseinheit erfasst wurde; und
Benachrichtigen der Drahtloskommunikationsvorrichtung über die Liste und den empfohlenen Betriebsparameter.

8. Verfahren, umfassend:
Benachrichtigen einer Netzwerkverwaltungssteuervorrichtung (20) über Informationen, die ein Netzwerk, Informationen über Funkzugangstechnologie, Informationen, die sich auf ein betriebsfähiges Frequenzband beziehen, Informationen, die sich auf einen geografischen Ort und/oder eine geografische Region beziehen, Informationen, die sich auf einen Duplex-Modus beziehen, oder Informationen, die sich auf ein Übertragungszeitintervall beziehen, angeben, wobei die Informationen, die sich auf den Duplex-Modus beziehen, mindestens eine Kennung beinhalten, die einen Duplex-Modus anzeigt, und wobei es sich beim Duplex-Modus um TDD handelt und die Informationen, die sich auf den Duplex-Modus beziehen, ferner einen oder mehrere in Frage kommende Frameauslegungen beinhalten, einschließlich einer Kombination von Uplink und Downlink;
Erfassen eines empfohlenen Betriebsparameters und einer Liste einschließlich Informationen über eine zweite Drahtloskommunikationsvorrichtung (30), die sich mit einer berechneten hohen Wahrscheinlichkeit in der umliegenden Funkumgebung befindet, von der Netzwerkverwaltungssteuervorrichtung;
Selbstorganisation eines Drahtlos-Parameters auf der Grundlage des empfohlenen Betriebsparameters;
Extrahieren einer zweiten Drahtloskommunikationsvorrichtung, die sich in der umliegenden Funkumgebung befindet, aus der Liste, unter Verwendung des bei der Selbstorganisation verwendeten Drahtlos-Parameters; und
Durchführen von Signalisierung zum Aufbau einer Schnittstelle zur extrahierten zweiten Drahtloskommunikationsvorrichtung, die sich in der umliegenden Funkumgebung befindet.

9. Computerprogramm, umfassend Programmcodemittel zum Veranlassen eines Computers, die Schritte des Verfahrens nach Anspruch 7 oder 8 durchzuführen, wenn das Computerprogramm auf einem Computer ausgeführt wird.

## Revendications

1. Dispositif (20) de commande de gestion de réseau comportant :
une première unité (231) d'acquisition d'informations configurée pour acquérir des informations indiquant un réseau auquel appartiennent un ou plusieurs dispositifs (30) de communication sans fil, des informations de technologie d'accès radio, des informations se rapportant à une bande de fréquences exploitable, des informations se rapportant à un lieu et/ou à une région géographique, des informations se rapportant à un mode de duplex, ou des informations se rapportant à un intervalle de temps de transmission, les informations se rapportant au mode de duplex comprenant au moins un identifiant indiquant un mode de duplex, et le mode de duplex étant un TDD et les informations se rapportant au mode de duplex comprenant en outre une ou plusieurs candidates pour une configuration de trame comprenant une combinaison de liaison montante et de liaison descendante ;
une première unité (232) de notification configurée pour notifier les informations à un dispositif (10) de commande de communication ;
une seconde unité (233) d'acquisition d'informations configurée pour acquérir un paramètre de fonctionnement recommandé sélectionné d'après les informations ;
une unité (234) de génération configurée pour générer une liste comprenant des informations d'un second dispositif de communication sans fil qui présente une probabilité calculée élevée d'être situé dans l'environnement radio avoisinant du dispositif de communication sans fil, en utilisant le paramètre de fonctionnement recommandé acquis par la seconde unité d'acquisition d'informations ; et
une seconde unité (235) de notification configurée pour notifier au dispositif de communication sans fil la liste et le paramètre de fonctionnement recommandé.

2. Dispositif de commande de gestion de réseau selon la revendication 1,
la première unité (231) d'acquisition d'informations étant configurée pour acquérir au moins les informations se rapportant au lieu et/ou à la région géographique et les informations se rapportant au mode de duplex,
le paramètre de fonctionnement recommandé acquis par la seconde unité (235) de notification comprenant au moins des informations se rapportant à un mode de duplex recommandé, et
l'unité (234) de génération étant configurée pour générer la liste comprenant les informations du dispositif de communication sans fil qui présente une possibilité d'être situé au voisinage du dispositif de communication sans fil, en utilisant les informations se rapportant au mode de duplex recommandé.

3. Dispositif (30) de communication sans fil comportant :
une première unité (331) de notification configurée pour notifier à un dispositif (20) de commande de gestion de réseau des informations indiquant un réseau, des informations de technologie d'accès radio, des informations se rapportant à une bande de fréquences exploitable, des informations se rapportant à un lieu et/ou à une région géographique, des informations se rapportant à un mode de duplex, ou des informations se rapportant à un intervalle de temps de transmission, les informations se rapportant au mode de duplex comprenant au moins un identifiant indiquant un mode de duplex, et le mode de duplex étant un TDD et les informations se rapportant au mode de duplex comprenant en outre une ou plusieurs candidates pour une configuration de trame comprenant une combinaison de liaison montante et de liaison descendante ;
une unité (332) d'acquisition d'informations configurée pour acquérir un paramètre de fonctionnement recommandé et une liste comprenant des informations d'un second dispositif de communication sans fil qui présente une probabilité calculée élevée d'être situé dans l'environnement radio avoisinant à partir du dispositif de commande de gestion de réseau ;
une unité (333) d'auto-organisation configurée pour auto-organiser un paramètre sans fil d'après le paramètre de fonctionnement recommandé acquis par l'unité d'acquisition d'informations ;
une unité (334) de traitement d'informations configurée pour extraire un second dispositif de communication sans fil qui est situé dans l'environnement radio avoisinant de la liste acquise par l'unité d'acquisition d'informations en utilisant le paramètre sans fil organisé par l'unité d'auto-organisation ; et
une seconde unité (335) de notification configurée pour réaliser une signalisation servant à construire une interface avec le second dispositif de communication sans fil qui est situé dans l'environnement radio avoisinant et qui a été extrait par l'unité de traitement d'informations.

4. Dispositif de communication sans fil selon la revendication 3,
le paramètre de fonctionnement recommandé acquis par l'unité (332) d'acquisition d'informations comprenant au moins des informations se rapportant à un mode de duplex recommandé, et
l'unité (333) d'auto-organisation étant configurée pour auto-organiser un paramètre se rapportant à un mode de duplex en utilisant les informations se rapportant au mode de duplex recommandé.

5. Dispositif de communication sans fil selon la revendication 4,
dans un cas où un TDD est recommandé, l'unité d'auto-organisation sélectionnant une des candidates pour la configuration de trame et effectuant une auto-organisation de telle façon qu'un fonctionnement basé sur la configuration de trame sélectionnée soit réalisé.

6. Dispositif de communication sans fil selon la revendication 3,
la seconde unité (335) de notification étant configurée pour réaliser une signalisation comprenant au moins des informations se rapportant à une bande de fréquences d'exploitation et des informations se rapportant à un mode de duplex.

7. Procédé comportant les étapes consistant à :
acquérir des informations indiquant un réseau auquel appartiennent un ou plusieurs dispositifs (30) de communication sans fil, des informations de technologie d'accès radio, des informations se rapportant à une bande de fréquences exploitable, des informations se rapportant à un lieu et/ou à une région géographique, des informations se rapportant à un mode de duplex, ou des informations se rapportant à un intervalle de temps de transmission, les informations se rapportant au mode de duplex comprenant au moins un identifiant indiquant un mode de duplex, et le mode de duplex étant un TDD et les informations se rapportant au mode de duplex comprenant en outre une ou plusieurs candidates pour une configuration de trame comprenant une combinaison de liaison montante et de liaison descendante ;
notifier les informations à un dispositif (10) de commande de communication ;
acquérir un paramètre de fonctionnement recommandé sélectionné d'après les informations ;
générer une liste comprenant des informations d'un second dispositif de communication sans fil qui présente une probabilité calculée élevée d'être situé dans l'environnement radio avoisinant du dispositif de communication sans fil, en utilisant le paramètre de fonctionnement recommandé acquis par la seconde unité d'acquisition d'informations ; et
notifier au dispositif de communication sans fil la liste et le paramètre de fonctionnement recommandé.

8. Procédé comportant les étapes consistant à :
notifier à un dispositif (20) de commande de gestion de réseau des informations indiquant un réseau, des informations de technologie d'accès radio, des informations se rapportant à une bande de fréquences exploitable, des informations se rapportant à un lieu et/ou à une région géographique, des informations se rapportant à un mode de duplex, ou des informations se rapportant à un intervalle de temps de transmission, les informations se rapportant au mode de duplex comprenant au moins un identifiant indiquant un mode de duplex, et le mode de duplex étant un TDD et les informations se rapportant au mode de duplex comprenant en outre une ou plusieurs candidates pour une configuration de trame comprenant une combinaison de liaison montante et de liaison descendante ;
acquérir un paramètre de fonctionnement recommandé et une liste comprenant des informations d'un second dispositif (30) de communication sans fil qui présente une probabilité calculée élevée d'être situé dans l'environnement radio avoisinant à partir du dispositif de commande de gestion de réseau ;
auto-organiser un paramètre sans fil d'après le paramètre de fonctionnement recommandé ;
extraire de la liste un second dispositif de communication sans fil qui est situé dans l'environnement radio avoisinant, en utilisant le paramètre sans fil utilisé dans l'auto-organisation ; et
réaliser une signalisation servant à construire une interface avec le second dispositif de communication sans fil extrait qui est situé dans l'environnement radio avoisinant.

9. Programme d'ordinateur comportant des moyens de code de programme destinés à amener un ordinateur à réaliser les étapes dudit procédé selon la revendication 7 ou 8 lorsque ledit programme d'ordinateur est exécuté sur un ordinateur.
